# EUROPEAN PATENT SPECIFICATION

(11) **EP 3 461 698 B1**
(45) Date of publication and mention of the grant of the patent: **04.12.2019**
(21) Application number: 17194300.4
(22) Date of filing: 02.10.2017
(51) Int. Cl.: B60R 25/24, B60P 3/07, B60R 25/25

(54) **ACCESS CONTROL SYSTEM FOR VEHICLE TRANSPORTING LOAD CARRIER AND METHOD**
ZUGANGSKONTROLLSYSTEM FÜR FAHRZEUGTRANSPORTLADUNGSTRÄGER UND VERFAHREN
SYSTÈME DE CONTRÔLE D'ACCÈS POUR UN VÉHICULE DE TRANSPORT DE SUPPORT DE CHARGE ET PROCÉDÉ

(43) Date of publication of application: 03.04.2019
(73) Proprietor: Assa Abloy AB, 107 23 Stockholm (SE)
(72) Inventor: STENLUND, Peter, 116 22 Stockholm (SE)
(74) Representative: Kransell & Wennborg KB

(56) References cited:
- CN-A- 104 972 950
- US-A- 4 647 270
- US-A- 4 822 222
- US-A- 4 966 510
- US-A1- 2014 152 422

## Description

### TECHNICAL FIELD

The present disclosure generally relates to an access control system for a vehicle transporting load carrier. In particular, an access control system for preventing unauthorized loading/unloading of a transported vehicle to/from a load carrier and a method for preventing unauthorized loading/unloading of a transported vehicle to/from a load carrier are provided.

### BACKGROUND

Unauthorized access to load and unload vehicle hauling trucks has been a problem since decades. Hundreds of millions of vehicle transports are made globally each year and vehicles are frequently stolen along the transportation route. When transporting vehicles from a manufacturer, the vehicles are typically delivered to a hub, for example by ship or train. At the hub, the vehicles may be loaded onto specialized carrying trucks, such as hauling trucks comprising a trailer.

When a driver is unloading a vehicle from a trailer carrying several vehicles, for example at a vehicle retail store, it may take the driver several minutes until he or she returns to the truck. The keys are often left in the driving seat of each vehicle, the gate to the trailer is typically left open and there is no mechanical protection of the vehicles in the truck. During this time, an unauthorized person might rapidly unload another unprotected vehicle from the trailer.

A significant number of vehicles are also loaded/unloaded at the wrong geographic position, authorized and unauthorized. A high number of complementary transports are therefore required to supply the final receiver with the correct vehicles.

At a hub, for example a harbor area, there may be hundreds of vehicles of the same model and color and without license plates. The driver of the truck must know the identity of each vehicle to be loaded on the trailer and the intended address with complete unloading instructions before the transport can be made. The puzzle to load and unload the trailer is a highly advanced exercise to perform. Today, the driver identity, the identity of the person loading/unloading the trailer, the identity of the vehicle(s) being loaded/unloaded at any time and the geographic position are unknown. No audit trail is available afterwards on incident. It is therefore difficult to trace where, when and by whom which vehicle was loaded/unloaded.

US 5051046 A discloses a completely enclosed trailer aiming to meet automobile manufacturers' concerns for additional protection.

Further, US 2014/152422 A discloses an access control system, comprising a biometric reader configured to read a biometric feature indicating the identity of an operator and to produce biometric data based on the biometric feature, and a control unit configured to send an authorization signal to a door upon verifying that the operator us authorized to open the door based on the biometric data.

### SUMMARY

One object of the present disclosure is to provide an access control system that reliably prevents unauthorized loading/unloading of a transported vehicle to/from a load carrier.

A further object of the present disclosure is to provide an access control system that prevents unauthorized loading/unloading of a transported vehicle to/from a load carrier in a simple manner.

A still further object of the present disclosure is to provide an access control system that can provide a detailed audit trail related to loading/unloading of a transported vehicle to/from a load carrier and attempts thereto.

A still further object of the present disclosure is to provide an access control system that enables authorized and fast loading/unloading of a transported vehicle to/from a load carrier.

A still further object of the present disclosure is to provide an access control system for preventing unauthorized loading/unloading of a transported vehicle to/from a load carrier that can easily be retrofitted to an existing load carrier, or to an existing truck comprising a load carrier.

A still further object is to provide a method solving one or more of the foregoing objects.

According to one aspect, there is provided an access control system for preventing unauthorized loading/unloading of a transported vehicle to/from a load carrier, the access control system comprising a blocking device configured to be arranged on the load carrier and enabled to move between a blocking position, where the transported vehicle is blocked from passing the blocking device, and an unblocking position, where the transported vehicle is allowed to pass the blocking device, based on an authorization signal; a biometric reader configured to read a biometric feature indicating the identity of an operator and to produce biometric data based on the biometric feature; and a control unit configured to send the authorization signal to the blocking device upon verifying that the operator is authorized to move the blocking device based on the biometric data.

The biometric feature of the operator read by the biometric reader may for example be constituted by fingerprint, face recognition, iris recognition, heart rate, voice and/or movement by the operator. Several biometric features indicating the identity of the operator may be required to be read by one or more biometric readers arranged in one or more access devices to produce the verifiable biometric data.

The biometric reader may be provided in an access device constituted by a wristband wearable by the operator or a smartphone. In these cases, the access device may be configured to send the biometric data wirelessly to the control unit, for example by means of BLE (Bluetooth Low Energy) or NFC (Near Field Communication). In case the access device is constituted by a smartphone, the access device may send audit trail data and/or verification data to an online cloud. In case the access device is constituted by a wristband, the access device may communicate directly with the cloud or via a smartphone etc. Alternatively, the biometric reader (or the access device comprising the biometric reader) may be arranged in the load carrier or in a cabin of a truck comprising the load carrier. The operator may be delegated access from a distributed network or cloud and may receive a valid credential device to the access device.

The blocking device according to the present disclosure may comprise a frame that can be raised and lowered. The frame of the blocking device may comprise at least one horizontal bar for blocking a transported vehicle from passing the blocking device when the blocking device is raised, i.e. in the blocking position. The at least one horizontal bar may span across the entire width or at least 90% of the width of the load carrier.

The blocking device may further comprise an actuator arranged to actuate movements of the blocking device between the blocking position and the unblocking position. According to one example, the actuator is constituted by a hydraulic cylinder. The actuator may alternatively be constituted by a hydraulic motor, a pneumatic cylinder or motor or an electric motor. The blocking device may comprise only one single actuator.

The hydraulic cylinder may be centered along the width of the load carrier, e.g. between wheels on opposite sides of the load carrier. The blocking device may be configured such that the frame moves or rotates from the blocking position to the unblocking position by contracting the hydraulic cylinder and such that the frame moves or rotates from the unblocking position to the blocking position by extending the hydraulic cylinder, or vice versa. The blocking device can thus move from the blocking position to the unblocking position, or vice versa, by one single stroke by the hydraulic cylinder.

The blocking device may further comprise a lock that locks the actuator in the blocking position and/or in the unblocking position. The blocking device may unlock the lock, prior to moving the blocking device, when receiving the authorization signal from the control unit. The lock may comprise a pin. The blocking device may be automatically self-locking and secured at the blocking position such that the blocking device cannot be manipulated by pushing on the frame, even if the actuator would be defect or damaged.

In the blocking position, the frame of the blocking device may be oriented substantially parallel with the wheel axes of the load carrier. The frame of the blocking device may alternatively be differently oriented, e.g. such that the frame of the blocking device is substantially perpendicular to the wheel axes of the load carrier.

The access control system according to the present disclosure may be added to a truck as a retrofit or add-on. Thus, the access control system may constitute an accessory for a vehicle transporting load carrier or truck. That is, the blocking device may be arranged on (e.g. assembled to) a load carrier, the biometric reader may be provided (either portable or installed in a truck) and the control unit may be arranged in the truck, e.g. in the tractor unit or in the load carrier. Alternatively, the blocking device and the control unit may be integrated in production of the load carrier and/or in the truck comprising the load carrier, as the case may be.

The access control system according to the present disclosure may further comprise an alarm system. In this case, the control unit may be configured to command the alarm system to deactivate the alarm system prior to loading/unloading a transported vehicle to/from the load carrier upon verifying that the operator is authorized based on the biometric data from the biometric reader. The control unit may further be configured to command the alarm system to activate the alarm system again after the transported vehicle has been loaded/unloaded to/from the load carrier.

Transported vehicles according to the present disclosure may for example be constituted by cars, vans, trucks, buses, tractors, terrain vehicles, special vehicles and other kinds of vehicles.

The access control system may further comprise an audit trail database and the access control system may be configured to store audit trail data related to access attempts on the blocking device and/or loading/unloading of transported vehicles to/from the load carrier in the audit trail database. With an audit trail database according to the present disclosure, it is possible to trace the identity of an operator who has tried to unblock the blocking device (both successful and unsuccessful attempts), the identity of an operator who has loaded/unloaded a transported vehicle to/from the load carrier, the identity of the transported vehicle that has been loaded/unloaded and/or the time and location of these events.

The audit trail database may be an online database accessible from the Internet, e.g. a cloud, and may be managed by a vehicle transportation company. The audit trail data may be temporarily stored locally in the access control system, e.g. in the control unit, and may be regularly uploaded to the audit trail database, such as every morning. For example, the audit trail data may be regularly transmitted from the control unit to the access device comprising the biometric reader (e.g. wristband, smartphone or similar device to be carried by the operator) via BLT and from the access device comprising the biometric reader to the cloud via the Internet.

Alternatively, the audit trail database may be offline. In this case, the audit trail database may for example be arranged in the control unit of the access control system.

By storing audit trail data in an audit trail database according to the present disclosure, it is possible to keep track of each single transported vehicle at each transportation route, before loading until the transported vehicle is securely delivered to an end destination according to given instructions and together with a belonging set of keys.

According to one variant, the access control system comprises a position device, such as a GPS (Global Positioning System), and the audit trail data comprises the geographical positions of the load carrier recorded by the position device. In this case, the control unit may be configured to send the authorization signal to the blocking device upon verifying that the operator is authorized to move the blocking device based on the biometric data and upon verifying that the current geographical position of the load carrier matches the most recent geographical position of the audit trail data. Should the current geographical position of the load carrier not match the most recent geographical position of the audit trail data, an alarm system may be activated, e.g. an alarm message to a remote control center or similar may be sent for further action.

The audit trail data related to access attempts on the blocking device may comprise, for each attempt, a biometric feature of the operator, the identity of the operator, whether the operator was considered authorized, the time and/or the location of the attempt.

The audit trail data related to loading/unloading of transported vehicles to/from the load carrier may comprise at least one vehicle characteristic, an identifier associated with each transported vehicle, a biometric feature of the operator and/or the identity of the operator. The identifier may for example be constituted by an RFID (Radio-Frequency Identification) tag or an NFC (Near Field Communication) tag associated with a transported vehicle.

The access control system may further comprise an accelerometer configured to detect a vibrational vehicle characteristic associated with a transported vehicle moving on the load carrier. Thus, vibrational vehicle characteristics of each loaded/unloaded transported vehicle may be recorded and stored in the audit trail database. The accelerometer may be constituted by a three-axis accelerometer.

The access control system may comprise several accelerometers to detect a vibrational characteristic associated with a transported vehicle moving on the load carrier. By means of several such accelerometers, the access control system may be configured to calculate and store a parking position of the transported vehicle on the load carrier as audit trail data in the audit trail database.

The access control system may be configured to detect when a transported vehicle has passed the blocking device and the control unit may be configured to instruct the blocking device to move from the unblocking position to the blocking position upon detecting that a transported vehicle has passed the blocking device. For example, by means of the at least one accelerometer, it may be concluded that a transported vehicle has stopped on the load carrier after being loaded or that a transported vehicle has rolled off the load carrier when the vibrations have stopped.

The access control system may further comprise a weight detecting device configured to detect the weight of all transported vehicles loaded on the load carrier. The weight of a loaded/unloaded transported vehicle may be calculated from the weight detected by the weight detecting device prior to and after the transported vehicle has been loaded/unloaded. The weight of a transported vehicle also constitutes a vehicle characteristic according to the present disclosure that may be stored in the audit trail database.

The access control system may further comprise a camera configured to detect a visual vehicle characteristic of a transported vehicle moving on the load carrier and/or a visual biometric feature of an operator driving the transported vehicle on the load carrier. The camera may for example be arranged on the load carrier. A visual biometric feature may be constituted by the face and/or the eyes of the operator driving the transported vehicle on the load carrier. The visual vehicle characteristic of the transported vehicle may be constituted by an image of the transported vehicle. Also the visual vehicle characteristics and the visual biometric features detected by the camera may be stored in the audit trail database.

In case the access control system comprises an accelerometer, a weight detecting device and a camera, the access control system comprises three independent means for collecting vehicle characteristics (and visual biometric features of the operator, as the case may be). This provides for a reliable prevention of unauthorized loading/unloading of a transported vehicle to/from the load carrier. That is, it can be ensured that it is actually the intended transported vehicle that is loaded/unloaded and not another transported vehicle.

The access control system may further comprise a load carrier configured to carry at least one transported vehicle. The access control system may further comprise a hauling truck or transport vehicle comprising the load carrier.

According to one example, the truck comprises a tractor unit and a trailer, such as a semi-trailer. In this case, the trailer constitutes the load carrier. According to a further example, the truck is constituted by a box truck. In this case, the load carrier may be constituted by the box. A box truck may alternatively be referred to as a straight truck. Throughout the present disclosure, a truck may alternatively be referred to as a transport vehicle. For example, the truck may be constituted by a car carrier vehicle. The load carrier may be configured to carry one or several transported vehicles for transportation.

According to a further aspect, there is provided a method for preventing unauthorized loading/unloading of a transported vehicle to/from a load carrier, the method comprising reading a biometric feature indicating the identity of an operator and producing biometric data based on the biometric feature; determining, based on the biometric data, whether the operator is authorized to move a blocking device; sending an authorization signal to the blocking device upon verifying that the operator is authorized to move the blocking device; and based on the authorization signal, moving the blocking device between a blocking position, where the transported vehicle is blocked from passing the blocking device, and an unblocking position, where the transported vehicle is allowed to pass the blocking device. For example, the blocking device may be moved from the blocking position to the unblocking position based on the authorization signal. The blocking device may also be moved from the unblocking position to the blocking position based on the authorization signal.

The method may further comprise storing audit trail data related to access attempts on the blocking device and/or loading/unloading of transported vehicles to/from the load carrier in an audit trail database.

The audit trail data related to access attempts on the blocking device may comprise, for each attempt, a biometric feature of the operator, the identity of the operator, whether the operator was considered authorized, the time and/or the location of the attempt.

The audit trail data related to loading/unloading of transported vehicles to/from the load carrier may comprise at least one vehicle characteristic, an identifier associated with each transported vehicle, a biometric feature of the operator and/or the identity of the operator.

The method may further comprise detecting a vibrational vehicle characteristic associated with a transported vehicle moving on the load carrier.

The method may further comprise detecting the weight of all transported vehicles loaded on the load carrier.

The method may further comprise detecting a visual vehicle characteristic of a transported vehicle moving on the load carrier and/or a visual biometric feature of an operator driving the transported vehicle on the load carrier.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
- Figs. 1a to id:: schematically represent side views of an access control system comprising a truck;
- Fig. 2a:: schematically represents a rear view of one example of a blocking device;
- Fig. 2b:: schematically represents a side view of the blocking device in Fig. 2a in a blocking position;
- Fig. 2c:: schematically represents a side view of the blocking device in Fig. 2a in an unblocking position;
- Fig. 3:: schematically represents a perspective front view of a further example of a blocking device; and
- Fig. 4:: schematically represents a block diagram of one example of an access control system.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein. Rather, these embodiments are provided by way of example so that this disclosure will be thorough and complete, and will fully convey the scope of the invention to those skilled in the art. Like numbers refer to like elements throughout the description.

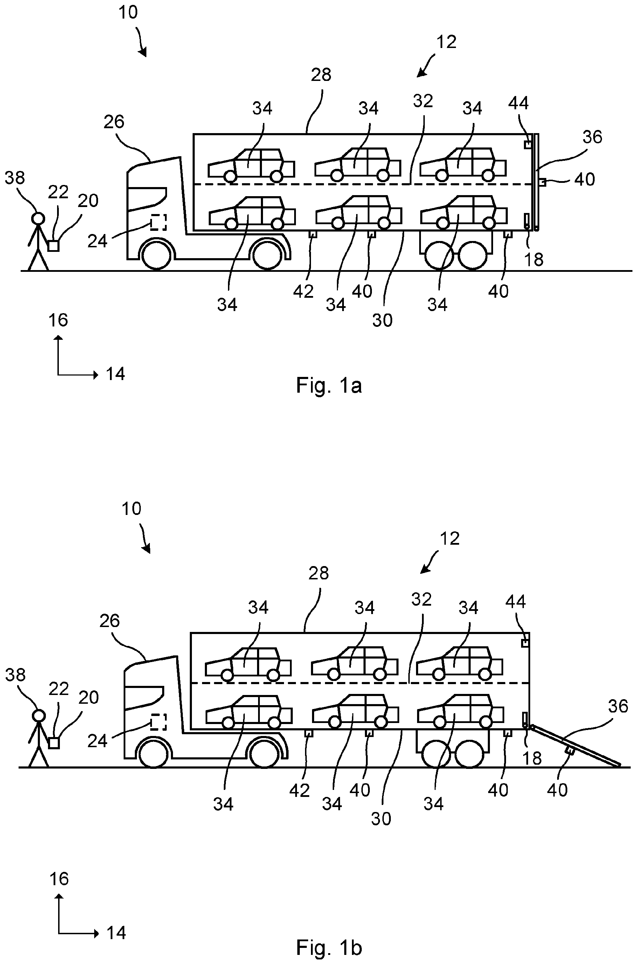

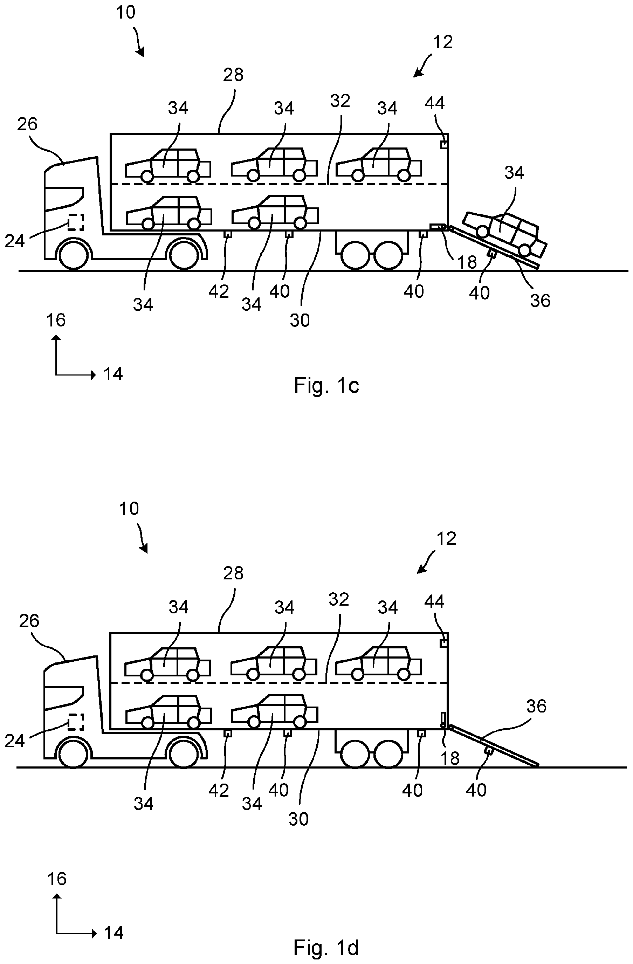

Figs. 1a to id schematically represent side views of an access control system 10. In the example of Figs. 1a to id, the access control system 10 comprises a truck 12. However, the access control system 10 may as well be an independent system that may be retrofitted for any truck 12. A horizontal direction 14 and a vertical direction 16 are also indicated in Figs. 1a to id.

With reference to Fig. 1a, the access control system 10 comprises a blocking device 18, a biometric reader 20 comprised by an access device 22 and a control unit 24. The truck 12 comprises a tractor unit 26 and a load carrier 28, in this case implemented as a trailer towed by the tractor unit 26. The load carrier 28 comprises a bottom platform 30, arranged at the bottom of the load carrier 28, and an intermediate platform 32, arranged at approximately half the height of the load carrier 28. Six transported vehicles 34 are parked in the load carrier 28, three on the intermediate platform 32 and three on the bottom platform 30. The transported vehicles 34 may be fixed on the respective platform 30, 32 by means of clamps or stoppers known in the art.

The intermediate platform 32 may for example be partially tiltable down to the bottom platform 30 in order to load/unload transported vehicles 34 to/from the intermediate platform 32. The load carrier 28 of this example further comprises a ramp or gate 36 that may be tilted between a closed position, as illustrated in Fig. 1a, to an open position.

In this example, the blocking device 18 is implemented as a barrier that can be moved from a blocking position, as illustrated in Fig. 1a, to an unblocking position and vice versa. The blocking device 18 is installed at a rear section of the load carrier 28 such that each transported vehicle 34, including the transported vehicles 34 on, or to be parked on, the intermediate platform 32, has to pass the blocking device 18 when loading/unloading the load carrier 28.

The access device 22 is constituted by a wristband carried by an operator 38 but may alternatively be constituted by a smartphone or other portable device. As a further example, the access device 22 may be installed in the cabin of the tractor unit 26 or in the load carrier 28. In Fig. 1a, the access device 22 is in wireless signal communication with the control unit 24, for example by means of BLE. The operator 38 may be a driver, a service technician or another person requesting access to the load carrier 28.

The control unit 24 is in this example installed in the tractor unit 26. However, the control unit 24 may alternatively be installed in the load carrier 28. The control unit 24 may comprise a microprocessor.

The access control system 10 further comprises three accelerometers 40 arranged on the load carrier 28. One accelerometer 40 is positioned on the gate 36 and two accelerometers 40 are positioned on the bottom platform 30. Further accelerometers 40 may be positioned on the intermediate platform 32. The accelerometers 40 may be constituted by three-dimensional accelerometers. Each accelerometer 40 is configured to detect a vibrational vehicle characteristic associated with a transported vehicle 34 moving on the load carrier 28. Thus, a unique vibrational pattern for each transported vehicle 34 can be detected by each accelerometer 40. The vibrational vehicle characteristics detected by the accelerometers 40 may also be used as a basis to determine when a transported vehicle 34 has left the load carrier 28, when a transported vehicle 34 has stopped inside the load carrier 28 and/or where the transported vehicle 34 has stopped in the load carrier 28. The accelerometers 40 are in signal communication with the control unit 24.

The access control system 10 further comprises a weight detecting device 42. The weight detecting device 42 is configured to detect the weight of all transported vehicles 34 loaded on the load carrier 28. In Fig. 1a, the weight detecting device 42 is positioned adjacent to the bottom platform 30 and is configured to detect the weight of the transported vehicles 34 on both the intermediate platform 32 and on the bottom platform 30. As an alternative, an additional weight detecting device 42 may be associated with the intermediate platform 32. The at least one weight detecting device 42 is in signal communication with the control unit 24

The access control system 10 further comprises a camera 44. The camera 44 is configured to detect a detect a visual vehicle characteristic of a transported vehicle 34 moving on the load carrier 28, e.g. an image of the transported vehicle 34. The camera 44 is also configured to detect a visual biometric feature of an operator 38 driving the transported vehicle 34 on the load carrier 28, e.g. an image of the operator 38. In the example in Fig. 1a, the camera 44 is positioned at a rear section of the load carrier 28. However, alternative positions and the provision of further cameras 44 are possible. The at least one camera 44 is in signal communication with the control unit 24.

The control unit 24 may be configured to extract further visual vehicle characteristics of the transported vehicle 34 and further visual biometric features of the operator 38 driving the transported vehicle 34, e.g. based on image processing of the image data from the at least one camera 44. The visual biometric features of the operator 38 collected by the camera 44 may for example comprise details of eyes and face.

The access control system 10 may further comprise an identifier reading unit (not shown) for reading an identifier associated with each transported vehicle 34. The identifier reading unit may be arranged in the load carrier 28, e.g. at the rear section of the load carrier 28 for reading identifiers in transported vehicles 34 passing the blocking device 18. The identifiers may for example be constituted by RFID tags or NFC tags and the identifier reading unit may be constituted by an RFID reader or an NFC reader.

For example, an identifier may be placed in each transported vehicle 34 when it arrives to a hub area. The identifier placed in the transported vehicle 34 may carry a position device as well in order to notify the final receiver of vehicle inventory status, delivery status and/or identity status. The operator 38 scans each identifier before transportation. On delivery to the final receiver, the the scan of each identifier is made when the key and the identifier of each transported vehicle 34 are delivered into a safe. The keys or the identifiers cannot be taken back after the keys have been delivered and the identifiers have been scanned inside a safe. A full audit trail of the status of the transported vehicles 34 is enabled and secured.

The access control system 10 may further optionally comprise an alarm system (not shown). The alarm system may generate an audible alarm, a visible alarm and/or an alarm message to a remote control center or similar.

The access control system 10 may further comprise a proximity sensor arrangement (not shown). The proximity sensor arrangement may be configured to detect persons and/or transported vehicles 34 on the gate 36 (when opened) or in the vicinity of the gate 36. The proximity sensor arrangement may for example comprise an IR (Infra Red) detector, a camera and/or a light beam, mounted at the rear section of the load carrier 28. The proximity sensor arrangement may monitor all moving activities on the gate 36 and the alarm system may be triggered upon detecting a person on the gate 36. Alternatively, or in addition, the proximity sensor arrangement may trigger the alarm system upon detecting a transported vehicle 34 on the gate 36 if not expected, e.g. if the operator 38 has not been verified as authorized. This makes the loading and unloading process more secure and accidents can be prevented. All activities of the proximity sensor arrangement, optionally together with geographical positions and time of these activities, may be stored as audit trail data.

The control unit 24 may further be configured such that when the blocking device 18 is in the blocking position and a transported vehicle 34 starts to move, regardless of reason, the control unit 24 may activate the alarm system. Such movements of the transported vehicle 34 may be detected by the camera 44, the accelerometers 40, the weight detecting device 42 and/or the proximity sensor arrangement.

A method for authorized unloading of a transported vehicle 34 from the load carrier 28 will now be described with reference to Figs. 1a to id. The operator 38 requests authorization and presents a biometric feature to the biometric reader 20 of the access device 22. This may be done when the operator 38 is still in the cabin of the tractor unit 26 or when the operator 38 is outside the truck 12. For example, the biometric reader 20 may read a fingerprint of the operator 38. The biometric reader 20 produces biometric data based on the biometric feature of the operator 38. The operator 38 may optionally be required to present a biometric feature to a further biometric reader (not shown), e.g. in the tractor unit 26 or on the load carrier 28. The operator 38 may be required to do so within a fixed time limit. The further biometric reader may for example be constituted by a camera reading the face and/or iris of the operator 38. The biometric data produced by the biometric reader 20 may be compared and/or combined with the biometric data produced by the further biometric reader.

It is then determined based on the biometric data from at least the biometric reader 20 whether or not the operator 38 is authorized to move the blocking device 18. Upon verifying that the operator 38 is authorized to move the blocking device 18, the control unit 24 sends an authorization signal to the blocking device 18.

The verification may be made locally in the control unit 24 (e.g. via BLE communication between the access device 22 and the control unit 24), in the access device 22 and/or online (e.g. via Internet connection of the access device 22). A confirmation of authorization may also be issued to the operator 38, e.g. via the access device 22.

The gate 36 is moved from the closed position in Fig. 1a to the opened position in Fig. 1b. The access control system 10 may require that the operator 38 is verified as authorized prior to allowing opening of the gate 36.

If the operator 38 is authorized, any alarm system of the truck 12 is deactivated and the blocking device 18 is automatically unlocked and moved from the blocking position in Fig. 1a to the unblocking position in Fig. 1c. Audit trail data indicating that the blocking device 18, the gate 36 and/or the alarm system have been opened/deactivated are stored. The exact time and geographical position of these events may also be stored as audit trail data.

The operator 38 then walks up on the load carrier 28 and enters a transported vehicle 34 to be unloaded from the load carrier 28. When driving the transported vehicle 34 off the load carrier 28, as illustrated in Fig. ic, the camera 44 detects a visual characteristic of the transported vehicle 34 and a visual biometric feature of the operator 38 driving the transported vehicle 34 and sends this data to the control unit 24. Vibrational vehicle characteristics, e.g. vibrational patterns, recorded by the accelerometers 40 during the unloading are also sent to the control unit 24. In addition, the weight detecting device 42 sends data to the control unit 24 prior to unloading and after unloading of the transported vehicle 34. By subtracting the weight detected by the weight detecting device 42 after unloading from the weight detected by the weight detecting device 42 prior to unloading, the weight of the unloaded transported vehicle 34 can be calculated and stored. An identifier of the transported vehicle 34 is also read by the identifier reading unit and is sent to the control unit 24 as audit trail data.

The data received by the control unit 24 from the camera 44 (e.g. a visual vehicle characteristic and/or a visual biometric feature of the operator 38), the accelerometers 40 (vibrational vehicle characteristic), the weight detecting device 42 (weight before and after unloading and/or calculated weight of the unloaded transported vehicle 34) and the access device 22 (identity of operator 38 and/or biometric data) are stored as audit trail data. The audit trail data may be temporarily stored in an audit trail database in the control unit 24 (i.e. offline) and may be regularly uploaded wirelessly to an online database (e.g. in a cloud). Additionally, the geographical position of the unloading event and the time is stored as audit trail data.

When the transported vehicle 34 has passed the blocking device 18, the blocking device 18 is automatically returned from the unblocking position to the blocking position illustrated in Fig. id and locked. Data from the accelerometers 40 may for example be used in order to determine when the transported vehicle 34 has passed the blocking device 18, e.g. when the transported vehicle 34 is entirely on the gate 36 or when the transported vehicle 34 has left the gate 36. Data from the weight detecting device 42 may also be used for this purpose. Alternatively, a further sensor may be used to determine when a transported vehicle 34 has passed the blocking device 18. The gate 36 may or may not be closed again, depending on whether further transported vehicles 34 are to be unloaded or loaded. Any alarm system may be activated again. Audit trail data indicating that the blocking device 18, the gate 36 and/or the alarm system have been closed/activated are stored. The exact time and geographical position of these events may also be stored as audit trail data.

The above-described unloading process may be highly automated. The operator 38 may only present a biometric feature to the biometric reader 20 and optionally open the gate 36 and can otherwise focus on remaining work.

When the load carrier 28 is empty, a full audit trail may be sent or presented to the final receiver, e.g. a retail store.

A method for authorized loading of a transported vehicle 34 to the load carrier 28 will now be described. The method for authorized loading may be reversed with respect to the above-described method for authorized unloading.

The operator 38 requests authorization and presents a biometric feature to the biometric reader 20 of the access device 22. This may be done when the operator 38 is in the transported vehicle 34 or when the operator 38 is outside the truck 12. For example, the biometric reader 20 may read a fingerprint of the operator 38. The biometric reader 20 produces biometric data based on the biometric feature of the operator 38.

It is then determined based on the biometric data from the biometric reader 20 (and optionally based on biometric data from further biometric readers) whether or not the operator 38 is authorized to move the blocking device 18. Upon verifying that the operator 38 is authorized to move the blocking device 18, the control unit 24 sends an authorization signal to the blocking device 18. The verification may be made locally in the control unit 24 or in the access device 22 or online.

If the operator 38 is authorized, any alarm system of the truck 12 is deactivated and the blocking device 18 is automatically unlocked and moved from the blocking position to the unblocking position. The gate 36 is also moved from the closed position to the opened position, if not already in the opened position. Audit trail data indicating that the blocking device 18, the gate 36 and/or the alarm system have been opened/deactivated are stored. The exact time and geographical position of these events may also be stored as audit trail data.

The operator 38 then drives a transported vehicle 34 to be loaded to the load carrier 28 onto the gate 36. When driving the transported vehicle 34 onto the load carrier 28, the camera 44 detects a visual characteristic of the transported vehicle 34 and a visual biometric feature of the operator 38 and sends this data to the control unit 24. Vibrational vehicle characteristics recorded by the accelerometers 40 during the loading are also sent to the control unit 24. Based on the vibrational vehicle characteristics, the control unit 24 calculates the position on the load carrier 28 where the transported vehicle 34 is parked. In addition, the weight detecting device 42 sends data to the control unit 24 prior to loading and after loading of the transported vehicle 34. By subtracting the weight detected by the weight detecting device 42 prior to loading from the weight detected by the weight detecting device 42 after loading, the weight of the loaded transported vehicle 34 can be calculated and stored. An identifier of the transported vehicle 34 is also read by the identifier reading unit and is sent to the control unit 24 as audit trail data.

The data received by the control unit 24 from the camera 44 (e.g. a visual vehicle characteristic and/or a visual biometric feature of the operator 38), the accelerometers 40 (vibrational vehicle characteristic), the weight detecting device 42 (weight before and after loading and/or calculated weight of the loaded transported vehicle 34) and the access device 22 (identity of operator 38 and/or biometric data) as well as the calculated parking position of the transported vehicle 34 on the load carrier 28 are stored as audit trail data in an audit trail database, either online (e.g. in a cloud) or offline (e.g. in the control unit 24). Additionally, the geographical position of the loading event and the time is stored as audit trail data.

When the transported vehicle 34 has passed the blocking device 18, the blocking device 18 is automatically returned from the unblocking position to the blocking position and locked. Data from the accelerometers 40 may for example be used in order to determine when the transported vehicle 34 has passed the blocking device 18, e.g. when the transported vehicle 34 has passed the gate 36, has been driven onto any of the bottom platform 30 and intermediate platform 32 and stopped. Data from the weight detecting device 42 may also be used for this purpose. Alternatively, a further sensor may be used to determine when a transported vehicle 34 has passed the blocking device 18. The gate 36 may or may not be closed again, depending on whether further transported vehicles 34 are to be loaded or unloaded. Any alarm system may be activated again. Audit trail data indicating that the blocking device 18, the gate 36 and/or the alarm system have been closed/activated are stored. The exact time and geographical position of these events may also be stored as audit trail data.

Also the above-described loading process may be highly automated. The operator 38 may only present a biometric feature to the biometric reader 20 and optionally open the gate 36 and can otherwise focus on remaining work.

When loading is completed, the operator 38 may confirm that the correct transported vehicles 34 have been loaded to the load carrier 28, e.g. via the access device 22.

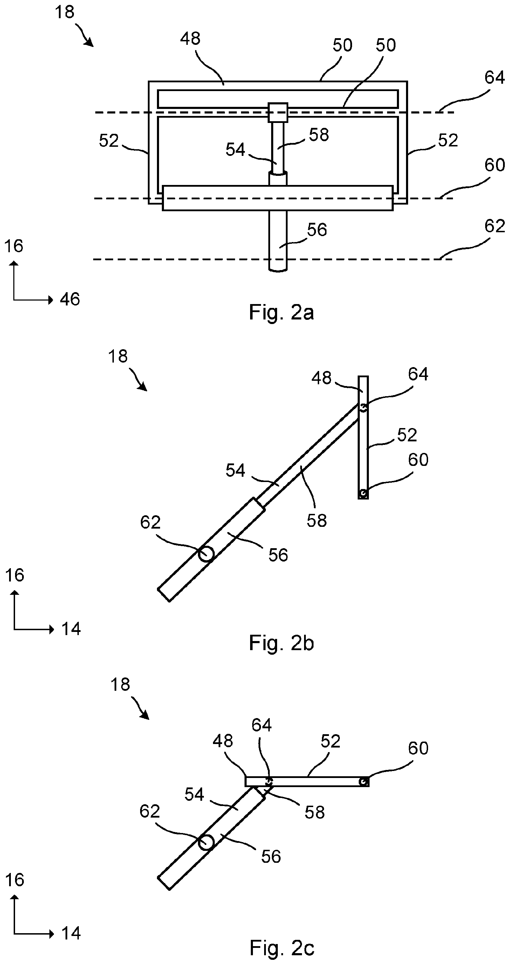

Fig. 2a schematically represents a rear view of a blocking device 18. Fig. 2a further indicates a second horizontal direction 46, perpendicular to the first horizontal direction 14. Fig. 2b schematically represents a side view of the blocking device 18 in Fig. 2a.

Fig. 2a and 2b both show the blocking device 18 in the blocking position. With collective reference to Figs. 2a and 2b, the blocking device 18 of this example comprises a barrier or frame 48 that is substantially vertically oriented. The frame 48 comprises two horizontal bars 50 and two support bars 52. In the illustrated blocking position of the blocking device 18, the support bars 52 are substantially vertically oriented.

The blocking device 18 of the example in Figs. 2a and 2b further comprises an actuator 54. The actuator 54 is here constituted by a hydraulic cylinder comprising a cylinder 56 and a piston rod 58. The actuator 54 may alternatively be constituted by a pneumatic cylinder or an actuator of other types.

The blocking device 18 may further comprise a lock (not illustrated) that locks the actuator 54 in the blocking position (and/or in the unblocking position according to Fig. 2c). The lock may be unlocked, prior to moving the blocking device 18, when receiving the authorization signal from the control unit 24. The lock may comprise a pin.

The blocking device 18 of the example in Figs. 2a and 2b further comprises a control unit (not shown) for communicating with the control unit 24 and for controlling the actuator 54 and the lock. The blocking device 18 also comprises a hydraulic pump (not shown) and an encoder (not shown) for sensing the position of the actuator 54.

The frame 48 is rotatable about a rotational axis 60, the actuator 54 is rotatable about a rotational axis 62 and the frame 48 is rotatable relative to the actuator 54 about a rotational axis 64. Thus, in this example, the frame 48 of the blocking device 18 may rotate between the blocking position and the unblocking position. Also the actuator 54 rotates slightly about the rotational axis 62 when the blocking device 18 moves between the blocking position and the unblocking position.

Fig. 2c schematically represents a side view of the blocking device 18 in Figs. 2a and 2b in an unblocking position. With one single stroke, the piston rod 58 of the actuator 54 moves from the blocking position in one continuous movement to the unblocking position illustrated in Fig. 2c. The encoder may verify that the actuator 54, and hence the blocking device 18 and the frame 48 of the blocking device 18, has reached the unblocking position (and the blocking position). When the blocking device 18 has adopted the unblocking position as illustrated in Fig. 2c, a transported vehicle 34 is allowed to pass, i.e. can drive over, the blocking device 18.

The unlocking of the lock of the actuator 54 and the subsequent movement of the blocking device 18 from the blocking position to the unblocking position may be triggered by the authorization signal sent from the control unit 24 to the blocking device 18, e.g. to the control unit of the blocking device 18.

Reversely, the movement of the blocking device 18 from the unblocking position to the blocking position and the subsequent locking of the lock of the actuator 54 may be triggered based on data from the accelerometers 40 indicating that a transported vehicle 34 has passed the blocking device.

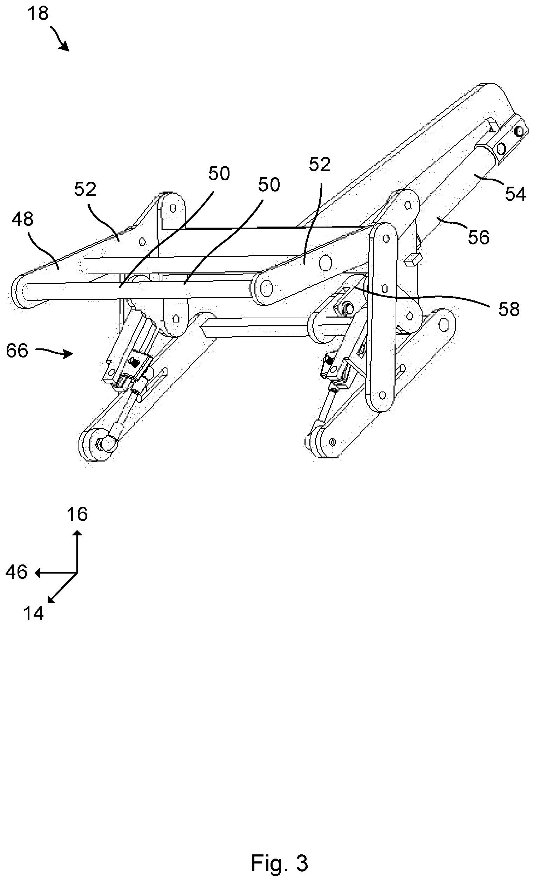

Fig. 3 schematically represents a perspective front view of a further example of a blocking device 18. Mainly differences with respect to Figs. 2a to 2c will be described.

The blocking device 18 of the example in Fig. 3 also comprises an actuator 54 and a frame 48 composed of two horizontal bars 50 and two support bars 52. The blocking device 18 further comprises a linkage 66. In Fig. 3, the actuator 54 is substantially horizontally arranged. The linkage 66 is configured to transmit a linear movement of the actuator 54 in one direction (a push in Fig. 3) to a raising movement of the frame 48 into the blocking position and to transmit a linear movement of the actuator 54 in the opposite direction (a pull in Fig. 3) to a lowering movement of the frame 48 into the unblocking position, illustrated in Fig. 3.

The actuator 54 may be covered by a metal cover (not shown) in order to prevent unauthorized manipulation of the actuator 54. A padlock or a cylinder with an integrated control system for access, such as CLIQ ®, may be used to lock the metal cover. In this manner, exposed parts, such as screws, of the blocking device 18 can be protected from unauthorized manipulation or deassembly of the blocking device 18.

The control system of the padlock may be managed independently of the access control system 10. Each operator 38 may separately request authorization to unlock the padlock on issues far away on the road in order to enable deassembly of the blocking device 18.

According to one variant, the control unit 24 is also arranged under the metal cover. The lock can be accessed separately by a separate system on specific request from an authorized person. Also the blocking device 18 in Figs. 2a to 2c may comprise the metal cover and the lock with integrated control system for access.

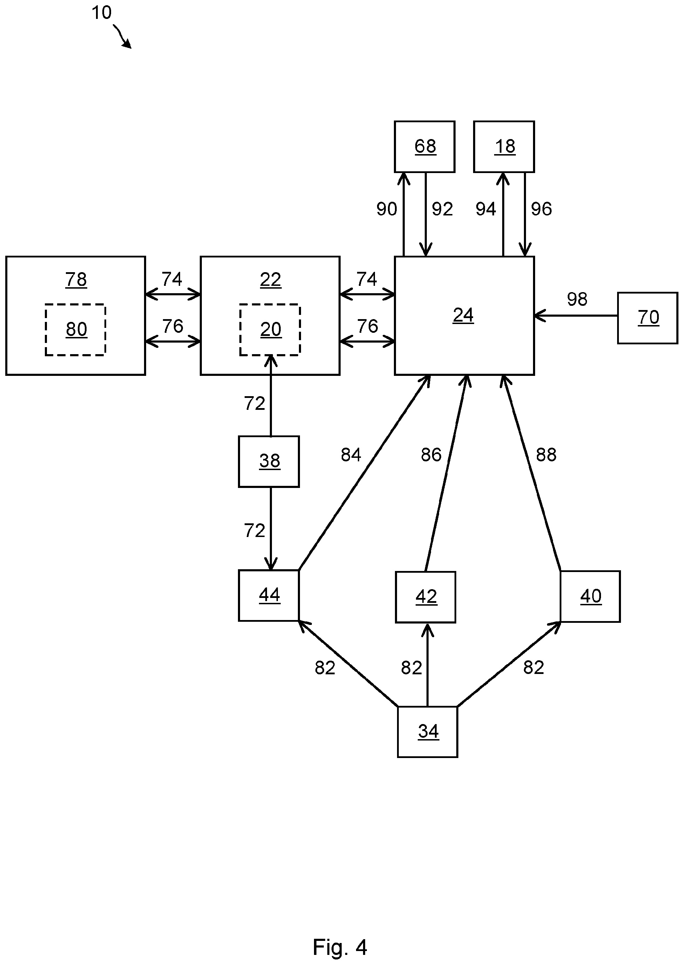

Fig. 4 schematically represents a block diagram of one example of an access control system 10 according to the present disclosure. The access control system 10 comprises an access device 22, a control unit 24, a blocking device 18, at least one camera 44, a weight detecting device 42, at least one accelerometer 40, an alarm system 68 and a position device, here exemplified as a GPS 70.

The access device 22 comprises a biometric reader 20 for reading a biometric feature 72 indicating the identity of the operator 38. The access device 22 is configured to send verification data 74 (including biometric data) to the control unit 24 and to receive verification data 74 from the control unit 24, for example via BLE. The access device 22 is configured to send audit trail data 76 to the control unit 24 and to receive audit trail data 76 from the control unit 24, for example via BLE.

The access device 22 is configured to send verification data 74 to the cloud 78 (that may also be comprised by the access control system 10) and to receive verification data 74 from the cloud 78 via the Internet. The access device 22 is configured to send audit trail data 76 to the cloud 78 and to receive audit trail data 76 from the cloud 78. The cloud 78 comprises an audit trail database 80 for storing and reading audit trail data 76.

The at least one camera 44 is configured to detect a visual biometric feature 72 of the operator 38 and to detect a visual vehicle characteristic 82 of the transported vehicle 34. The camera 44 is configured to send the visual biometric feature 72 and the visual vehicle characteristic 82 as image data 84 to the control unit 24.

The weight detecting device 42 is configured to detect a weight of all transported vehicles 34 which contain vehicle characteristics 82 of each transported vehicle 34. The weight detecting device 42 is configured to send the vehicle characteristic 82 as weight data 86 to the control unit 24.

The at least one accelerometer 40 is configured to detect a vibrational vehicle characteristic 82 associated with a transported vehicle 34. The at least one accelerometer 40 is configured to send the vehicle characteristic 82 as vibrational data 88 to the control unit 24.

The alarm system 68 is configured to receive an alarm command 90 from the control unit 24 and to send alarm data 92 to the control unit 24.

The blocking device 18 is configured to receive an authorization signal 94 from the control unit 24 and to send blocking device data 96 to the control unit 24.

The GPS 70 is configured to send GPS data 98 to the control unit 24.

The control unit 24 is configured to receive verification data 74 from the access device 22 and to send verification data 74 to the access device 22. The control unit 24 is configured to receive audit trail data 76 from the access device 22 and to send audit trail data 76 to the access device 22. Alternatively, or in addition, the control unit 24 may be configured to send verification data 74 and/or audit trail data 76 to the cloud 78 and to receive verification data 74 and/or audit trail data 76 from the cloud 78.

The control unit 24 is configured to receive the image data 84 from the at least one camera 44, to receive weight data 86 from the weight detecting device 42 and to receive vibrational data 88 from the at least one accelerometer 40. The control unit 24 is configured to send an alarm command 90 to the alarm system 68 and to receive alarm data 92 from the alarm system 68. The control unit 24 is configured to send an authorization signal 94 to the blocking device 18 and the receive blocking device data 96 from the blocking device 18. The control unit 24 is configured to receive GPS data 98 from the GPS 70.

The operator 38 may be delegated access from the cloud 78 and receive a valid credential to the access device 22. When verifying the operator 38, verification data 74 comprising the biometric data may be sent from the access device 22 to the control unit 24, e.g. via BLE. Alternatively, the access device 22 may be connected to the control unit 24, e.g. when the access device 22 is arranged in the cabin of the tractor unit 26 or in the load carrier 28. The control unit 24 may check the validity of the biometric data online, e.g. by communicating with the cloud 78 either directly or via the access device 22.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. Access control system (10) for preventing unauthorized loading/unloading of a transported vehicle (34) to/from a load carrier (28), the access control system (10) comprising:
- a blocking device (18) configured to be arranged on the load carrier (28) and enabled to move between a blocking position, where the transported vehicle (34) is blocked from passing the blocking device (18), and an unblocking position, where the transported vehicle (34) is allowed to pass the blocking device (18), based on an authorization signal (94);
- a biometric reader (20) configured to read a biometric feature (72) indicating the identity of an operator (38) and to produce biometric data based on the biometric feature (72); and
- a control unit (24) configured to send the authorization signal (94) to the blocking device (18) upon verifying that the operator (38) is authorized to move the blocking device (18) based on the biometric data.

2. The access control system (10) according to claim 1, further comprising an audit trail database (80) and wherein the access control system (10) is configured to store audit trail data (76) related to access attempts on the blocking device (18) and/or loading/unloading of transported vehicles (34) to/from the load carrier (28) in the audit trail database (80).

3. The access control system (10) according to claim 2, wherein the audit trail data (76) related to access attempts on the blocking device (18) comprises, for each attempt, a biometric feature (72) of the operator (38), the identity of the operator (38), whether the operator (38) was considered authorized, the time and/or the location of the attempt.

4. The access control system (10) according to claim 2 or 3, wherein the audit trail data (76) related to loading/unloading of transported vehicles (34) to/from the load carrier (28) comprises at least one vehicle characteristic (82), an identifier associated with each transported vehicle (34), a biometric feature (72) of the operator (38) and/or the identity of the operator (38).

5. The access control system (10) according to any of the preceding claims, further comprising an accelerometer (40) configured to detect a vibrational vehicle characteristic (82) associated with a transported vehicle (34) moving on the load carrier (28).

6. The access control system (10) according to any of the preceding claims, further comprising a weight detecting device (42) configured to detect the weight of all transported vehicles (34) loaded on the load carrier (28).

7. The access control system (10) according to any of the preceding claims, further comprising a camera (44) configured to detect a visual vehicle characteristic (82) of a transported vehicle (34) moving on the load carrier (28) and/or a biometric feature (72) of an operator (38) driving the transported vehicle (34) on the load carrier (28).

8. The access control system (10) according to any of the preceding claims, further comprising a load carrier (28) configured to carry at least one transported vehicle (34).

9. Method for preventing unauthorized loading/unloading of a transported vehicle (34) to/from a load carrier (28), the method comprising:
- reading a biometric feature (72) indicating the identity of an operator (38) and producing biometric data based on the biometric feature (72);
- determining, based on the biometric data, whether the operator (38) is authorized to move a blocking device (18);
- sending an authorization signal (94) to the blocking device (18) upon verifying that the operator (38) is authorized to move the blocking device (18); and
- based on the authorization signal (94), moving the blocking device (18) between a blocking position, where the transported vehicle (34) is blocked from passing the blocking device (18), and an unblocking position, where the transported vehicle (34) is allowed to pass the blocking device (18).

10. The method according to claim 9, further comprising storing audit trail data (76) related to access attempts on the blocking device (18) and/or loading/unloading of transported vehicles (34) to/from the load carrier (28) in an audit trail database (80).

11. The method according to claim 10, wherein the audit trail data (76) related to access attempts on the blocking device (18) comprises, for each attempt, a biometric feature (72) of the operator (38), the identity of the operator (38), whether the operator (38) was considered authorized, the time and/or the location of the attempt.

12. The access control system (10) according to claim 10 or 11, wherein the audit trail data (76) related to loading/unloading of transported vehicles (34) to/from the load carrier (28) comprises at least one vehicle characteristic (82), an identifier associated with each transported vehicle (34), a biometric feature (72) of the operator (38) and/or the identity of the operator (38).

13. The method according to any of claims 9 to 12, further comprising detecting a vibrational vehicle characteristic (82) associated with a transported vehicle (34) moving on the load carrier (28).

14. The method according to any of claims 9 to 13, further comprising detecting the weight of all transported vehicles (34) loaded on the load carrier (28).

15. The method according to any of claims 9 to 14, further comprising detecting a visual vehicle characteristic (82) of a transported vehicle (34) moving on the load carrier (28) and/or a biometric feature (72) of an operator (38) driving the transported vehicle (34) on the load carrier (28).

## Patentansprüche

1. Zugangskontrollsystem (10) zum Verhindern einer unberechtigten Ladung/Entladung eines transportierten Fahrzeugs (34) auf/von einen/einem Ladungsträger (28), wobei das Zugangskontrollsystem (10) Folgendes umfasst:
- eine Sperrvorrichtung (18), die konfiguriert ist, um auf dem Ladungsträger (28) angeordnet zu sein, und der ermöglicht ist, sich zwischen einer Sperrungsposition, wo das transportierte Fahrzeug (34) bezüglich des Passierens der Sperrvorrichtung (18) gesperrt ist, und einer Entsperrungsposition, wo dem transportierten Fahrzeug (34) ermöglicht ist, die Sperrvorrichtung (18) zu passieren, auf Grundlage eines Berechtigungssignals (94) zu bewegen;
- ein biometrisches Lesegerät (20), das konfiguriert ist, um ein biometrisches Merkmal (72) zu lesen, das die Identität eines Bedieners (38) angibt, und biometrische Daten auf Grundlage des biometrischen Merkmals (72) zu produzieren; und
- eine Steuereinheit (24), die konfiguriert ist, um das Berechtigungssignal (94) zu der Sperrvorrichtung (18) nach dem Verifizieren auf Grundlage der biometrischen Daten, dass der Bediener (38) berechtigt ist, die Sperrvorrichtung (18) zu bewegen, zu senden.

2. Zugangskontrollsystem (10) nach Anspruch 1, ferner umfassend eine Audit-Trail-Datenbank (80), und wobei das Zugangskontrollsystem (10) konfiguriert ist, um Audit-Trail-Daten (76) bezüglich Zugangsversuchen bei der Sperrvorrichtung (18) und oder des Ladens/Entladens von transportierten Fahrzeugen (34) auf/von den/dem Ladungsträger (28) in der Audit-Trail-Datenbank (80) zu speichern.

3. Zugangskontrollsystem (10) nach Anspruch 2, wobei die Audit-Trail-Daten (76) bezüglich Zugangsversuchen bei der Sperrvorrichtung (18) für jeden Versuch ein biometrisches Merkmal (72) des Bedieners (38), die Identität des Bedieners (38), wobei der Bediener (38) als berechtigt betrachtet wurde, die Zeit und/oder den Standort des Versuchs umfasst.

4. Zugangskontrollsystem (10) nach Anspruch 2 oder 3, wobei die Audit-Trail-Daten (76) bezüglich des Ladens/Entladens von transportierten Fahrzeugen (34) auf/von den/dem Ladungsträger (28) mindestens ein Fahrzeugmerkmal (82), eine Kennung, die mit jedem transportierten Fahrzeug (34) verknüpft ist, ein biometrisches Merkmal (72) des Bedieners (38) und/oder die Identität des Bedieners (38) umfassen.

5. Zugangskontrollsystem (10) nach einem der vorherigen Ansprüche, ferner umfassend einen Beschleunigungsmesser (40), der konfiguriert ist, um ein Fahrzeugvibrationsmerkmal (82) zu erfassen, das mit einem transportierten Fahrzeug (34) verknüpft ist, das sich auf dem Ladungsträger (28) bewegt.

6. Zugangskontrollsystem (10) nach einem der vorherigen Ansprüche, ferner umfassend eine Gewichtserfassungsvorrichtung (42), die konfiguriert ist, um das Gewicht aller transportierten Fahrzeuge (34) zu erfassen, die auf dem Ladungsträger (28) geladen sind.

7. Zugangskontrollsystem (10) nach einem der vorherigen Ansprüche, ferner umfassend eine Kamera (44), die konfiguriert ist, um ein visuelles Fahrzeugmerkmal (82) eines transportierten Fahrzeugs (34), das sich auf dem Ladungsträger (28) bewegt, und/oder ein biometrisches Merkmal (72) eines Bedieners (38), der das transportierte Fahrzeug (34) auf dem Ladungsträger (28) fährt, zu erfassen.

8. Zugangskontrollsystem (10) nach einem der vorherigen Ansprüche, ferner umfassend einen Ladungsträger (28), der konfiguriert ist, um mindestens ein transportiertes Fahrzeug (34) zu tragen.

9. Verfahren zum Verhindern eines unberechtigten Ladens/Entladens eines transportierten Fahrzeugs (34) auf/von einen/einem Ladungsträger (28), wobei das Verfahren Folgendes umfasst:
- Lesen eines biometrischen Merkmals (72), das die Identität eines Bedieners (38) angibt, und Produzieren von biometrischen Daten auf Grundlage des biometrischen Merkmals (72);
- Bestimmen auf Grundlage der biometrischen Daten, ob der Bediener (38) berechtigt ist, eine Sperrvorrichtung (18) zu bewegen;
- Senden eines Berechtigungssignals (94) zu der Sperrvorrichtung (18) nach dem Verifizieren, dass der Bediener (38) berechtigt ist, die Sperrvorrichtung (18) zu bewegen; und
- auf Grundlage des Berechtigungssignals (94), Bewegen der Sperrvorrichtung (18) zwischen einer Sperrungsposition, wo das transportierte Fahrzeug (34) bezüglich des Passierens der Sperrvorrichtung (18) gesperrt ist, und einer Entsperrungsposition, wo dem transportierten Fahrzeug (34) ermöglicht ist, die Sperrvorrichtung (18) zu passieren.

10. Verfahren nach Anspruch 9, ferner umfassend das Speichern von Audit-Trail-Daten (76) bezüglich Zugangsversuchen bei der Sperrvorrichtung (18) und/oder des Ladens/Entladens von transportierten Fahrzeugen (34) auf/von den/dem Ladungsträger (28) in einer Audit-Trail-Datenbank (80).

11. Verfahren nach Anspruch 10, wobei die Audit-Trail-Daten (76) bezüglich Zugangsversuchen bei der Sperrvorrichtung (18) für jeden Versuch ein biometrisches Merkmal (72) des Bedieners (38), die Identität des Bedieners (38), die Information, ob der Bediener (38) als berechtigt betrachtet wurde, die Zeit und/oder den Standort des Versuchs umfassen.

12. Zugangskontrollsystem (10) nach Anspruch 10 oder 11, wobei die Audit-Trail-Daten (76) bezüglich des Ladens/Entladens von transportierten Fahrzeugen (34) auf/von den/dem Ladungsträger (28) mindestens ein Fahrzeugmerkmal (82), eine Kennung, die mit jedem transportierten Fahrzeug (34) verknüpft ist, ein biometrisches Merkmal (72) des Bedieners (38) und/oder die Identität des Bedieners (38) umfassen.

13. Verfahren nach einem der Ansprüche 9 bis 12, ferner umfassend das Erkennen eines Fahrzeugvibrationsmerkmals (82), das mit einem transportierten Fahrzeug (34) verknüpft ist, das sich auf dem Ladungsträger (28) bewegt.

14. Verfahren nach einem der Ansprüche 9 bis 13, ferner umfassend das Erfassen des Gewichts aller transportierten Fahrzeuge (34), die auf dem Ladungsträger (28) geladen sind.

15. Verfahren nach einem der Ansprüche 9 bis 14, ferner umfassend das Erfassen eines visuellen Fahrzeugmerkmals (82) eines transportierten Fahrzeugs (34), das sich auf dem Ladungsträger (28) bewegt, und/oder eines biometrischen Merkmals (72) eines Bedieners (38), der das transportierte Fahrzeug (34) auf dem Ladungsträger (28) fährt.

## Revendications

1. Système de contrôle d'accès (10) pour empêcher un chargement/déchargement non autorisé d'un véhicule transporté (34) vers/depuis un porteur de charge (28), le système de contrôle d'accès (10) comprenant :
- un dispositif de blocage (18) configuré pour être disposé sur le porteur de charge (28) et activé afin de se déplacer entre une position de blocage, où le véhicule transporté (34) est bloqué de dépasser le dispositif de blocage (18) et une position de déblocage, où le véhicule transporté (34) est autorisé à dépasser le véhicule de blocage (18), sur la base d'un signal d'autorisation (94) ;
- un lecteur biométrique (20) configuré pour lire une caractéristique biométrique (72) indiquant l'identité d'un opérateur (38) et produire des données biométriques sur la base de la caractéristique biométrique (72) ; et
- une unité de commande (24) configurée pour envoyer le signal d'autorisation (94) au dispositif de blocage (18) lors de la vérification que l'opérateur (38) est autorisé à déplacer le dispositif de blocage (18) sur la base des données biométriques.

2. Système de contrôle d'accès (10) selon la revendication 1, comprenant en outre une base de données de piste d'audit (80) et dans lequel le système de contrôle d'accès (10) est configuré pour stocker des données de piste d'audit (76) relatives à des tentatives d'accès sur le dispositif de blocage (18) et/ou au déchargement/déchargement des véhicules transportés (34) vers/du porteur de charge (28) dans la base de données de piste d'audit (80).

3. Système de contrôle d'accès (10) selon la revendication 2, dans lequel les données de pistes d'audit (76) relatives aux tentatives d'accès sur le dispositif de blocage (18) comprennent, pour chaque tentative, une caractéristique biométrique (72) de l'opérateur (38), l'identité de l'opérateur (38), si l'opérateur (38) a été considéré autorisé, l'heure et/ou le lieu de la tentative.

4. Système de contrôle d'accès (10) selon la revendication 2 ou 3, dans lequel les données de piste d'audit (76) relatives au chargement/déchargement des véhicules transportés (34) vers/du porteur de charge (28) comprennent au moins une caractéristique de véhicule (82), un identifiant associé à chaque véhicule transporté (34) , une caractéristique biométrique (72) de l'opérateur (38) et/ou l'identité de l'opérateur (38).

5. Système de contrôle d'accès (10) selon une quelconque des revendications précédentes, comprenant en outre un accéléromètre (40) configuré pour détecter une caractéristique de véhicule vibratile (82) associée à un véhicule transporté (34) se déplaçant sur le porteur de charge (28).

6. Système de contrôle d'accès (10) selon une quelconque des revendications précédentes, comprenant en outre un dispositif de détection de poids (42) configuré pour détecter le poids de tous les véhicules transportés (34) chargés sur le porteur de charge (28).

7. Système de contrôle d'accès (10) selon une quelconque des revendications précédentes, comprenant en outre une caméra (44) configurée pour détecter une caractéristique de véhicule visuelle (82) d'un véhicule transporté (34) se déplaçant sur le porteur de charge (28) et/ou une caractéristique biométrique (72) d'un opérateur (38) conduisant le véhicule transporté (34) sur le porteur de charge (28).

8. Système de contrôle d'accès (10) selon une quelconque des revendications précédentes, comprenant en outre un porteur de charge (28) configuré pour porter au moins un véhicule transporté (34).

9. Procédé pour empêcher un chargement/déchargement non autoriser d'un véhicule transporté (34) vers/depuis un porteur de charge (28), le procédé comprenant de :
- lire une caractéristique biométrique (72) indiquant l'identité d'un opérateur (38) et produisant des données biométriques sur la base de la caractéristique biométrique (72) ;
- déterminer, sur la base des données biométriques, si l'opérateur (38) est autorisé à déplacer un dispositif de blocage (18) ;
- envoyer un signal d'autorisation (94) au dispositif de blocage (18) lors de la vérification que l'opérateur (38) est autorisé à déplacer le dispositif de blocage (18) ; et
- sur la base du signal d'autorisation (94), déplacer le dispositif de blocage (18) entre une position de blocage, où le véhicule transporté (34) est bloqué de dépasser le dispositif de blocage (18) et une position de déblocage, où le véhicule transporté (34) est autorisé à dépasser le dispositif de blocage (18).

10. Procédé selon la revendication 9, comprenant en outre de stocker des données de piste d'audit (76) relatives à des tentatives d'accès sur le dispositif de blocage (18) et/ou charger/décharger des véhicules transportés (34) vers/depuis le porteur de charge (28) dans une base de données de piste d'audit (80).

11. Procédé selon la revendication 10, dans lequel les données de pistes d'audit (76) relatives aux tentatives d'accès sur le dispositif blocage (18) comprennent, pour chaque tentative, une caractéristique biométrique (72) de l'opérateur (38), l'identité de l'opérateur (38), si l'opérateur (38) a été considéré autorisé, l'heure et/ou le lieu de la tentative.

12. Système de contrôle d'accès (10) selon la revendication 10 ou 11, dans lequel les données de piste d'audit (76) relatives au chargement/déchargement des véhicules transportés (34) vers/depuis le porteur de charge (28) comprennent au moins une caractéristique de véhicule (82), un identifiant associé à chaque véhicule transporté (34), une caractéristique biométrique (72) de l'opérateur (38) et/ou l'identité de l'opérateur (38).

13. Procédé selon une quelconque des revendications 9 à 12, comprenant en outre de détecter une caractéristique de véhicule vibratile (82) associée à un véhicule transporté (34) se déplaçant sur le porteur de charge (28).

14. Procédé selon une quelconque des revendications 9 à 13, comprenant en outre de détecter le poids de tous les véhicules transportés (34) chargés et sur le porteur de charge (28).

15. Procédé selon une quelconque des revendications 9 à 14, comprenant en outre de détecter une caractéristique visuelle de véhicule (82) d'un véhicule transporté (34) se déplaçant sur le porteur de charge (28) et/ou une caractéristique biométrique (72) d'un opérateur (38) conduisant le véhicule transporté (34) sur le porteur de charge (28).
